Europäisches Patentamt

European Patent Office

Office européen des brevets

(11) Publication number : **0 548 464 A1**

(12) **EUROPEAN PATENT APPLICATION**

(21) Application number : **92114185.9**

(22) Date of filing : **20.08.92**

(51) Int. Cl.⁵ : **G01B 11/04**

(30) Priority : **06.09.91 IT MI912363**

(43) Date of publication of application :
**30.06.93 Bulletin 93/26**

(84) Designated Contracting States :
**BE CH DE DK FR GB LI**

(71) Applicant : **ALCATEL ITALIA S.p.A.**
**Via Monte Rosa 15**
**I-20149 Milano (IT)**

(72) Inventor : **Passero, Adolfo**
**Via Tanucci 33**
**I-81110 Caserta (IT)**

(74) Representative : **Pohl, Herbert, Dipl.-Ing et al**
**Alcatel SEL AG Patent- und Lizenzwesen**
**Postfach 30 09 29**
**W-7000 Stuttgart 30 (DE)**

(54) **Method and arrangement for measuring the dimensions of a substantially box-like object travelling with uniform motion.**

(57) There is disclosed an arrangement and method of measuring the dimensions of a substantially box-shaped object having a rectilinear uniform motion, in particular carried by a conveyor belt, and oriented in such a way that one of its edges is substantially parallel to the direction of motion.

The invention is based upon the idea of intercepting with two consecutive edges of the leading end face of the moving object as many light beams emitted in directions making acute angles with the direction of motion by respective reflection optical systems, detecting the times of interception and calculating the dimensions of the moving object as a function of such times of interception and of geometrical and kinematic parameters.

Fig. 1

Jouve, 18, rue Saint-Denis, 75001 PARIS

The present invention relates to a method and arrangement for measuring the dimensions of a substantially box-like object travelling with uniform motion, in particular dragged by a conveyor belt, and oriented in such a way as to have one of its edges substantially parallel to the direction of motion.

In all situations wherein substantially box-like objects, such as post parcels or, more in general, boxes and packing-cases containing any type of goods are transported, e.g. through conveyor belts, towards storage areas or areas for loading means of transport such as trucks and freight cars, there is the need of evaluating the dimensions of the objects in order to evaluate the volumes of the loads in real time and therefore to optimize the transport.

In a system available on the market the objects are carried by a conveyor belt and the solution of the above-mentioned problem is based upon the use of the two rows of photocells, a horizontal one and a vertical one, connected with a computer ; the projections of the cross-section of the object along the directions of the two rows of photocells are periodically detected. In such a way the dimensions and, in particular, the volume of the object are computed with good accuracy. The accuracy depends on the rate at which such detections are made and also on the number of photocells per meter which is characteristics of the two rows.

This solution contemplates a high number of photocells, requires rather complicated calculations and therefore is expensive, but it is especially limited in that the maximum measurable dimensions depend on the length of the two rows of photocells.

It is the task of the invention to eliminate the deficencies of the prior art equipments as mentioned above.

Within said task it is an object of the present invention to provide an arrangement for measuring the dimensions of a substantially box-like object travelling with a uniform motion in which the number of detection points is indipendent of both object dimensions and measurement accuracy.

Another object of the present invention is to provide a measurement method to be used with the above-mentioned arrangement which does not reqiure complicated calculations and, consequently, an onerous computing circuitry.

The task and the aforesaid objects are substantially attained by a method and arrangement for measuring the dimensions of a substantially box-like object travelling with uniform motion, having the characteristics set forth in claims 1 and 8. Further advantageous aspects of the invention are set forth in the subclaims.

The invention is based upon the idea of intercepting, with two consecutive edges of the leading end face of the moving object, as many light beams emitted in directions making acute angles with the direction of motion by respective reflection optical systems, detecting the interception instants and calculating the dimensions of the object as a function of such instants and of geometric and kinematic parameters.

Thanks to this solution there is provided an arrangement for measuring the dimensions of an object travelling with a uniform motion which,at parity of accurancy with respect to known systems, is far simpler and much less expensive.

The invention will be explained more in detail next herein with reference to the attached drawings, illustrating some not limiting embodiments thereof, in which :
- Fig.1 shows a first embodiment of the arrangement according to the invention ;
- Fig.2 illustrates the electrical connections of the reflection optical elements with processing means for the arrangement in Fig. 1 ;
- Fig.3 shows, in a side view, a possible location of two reflection optical elements for measuring the altitude of an object by using the method of the present invention ; and
- Fig.4 shows, in a top view, a possible location of three reflection optical elements for measuring the width of an object by using the method of the present invention.

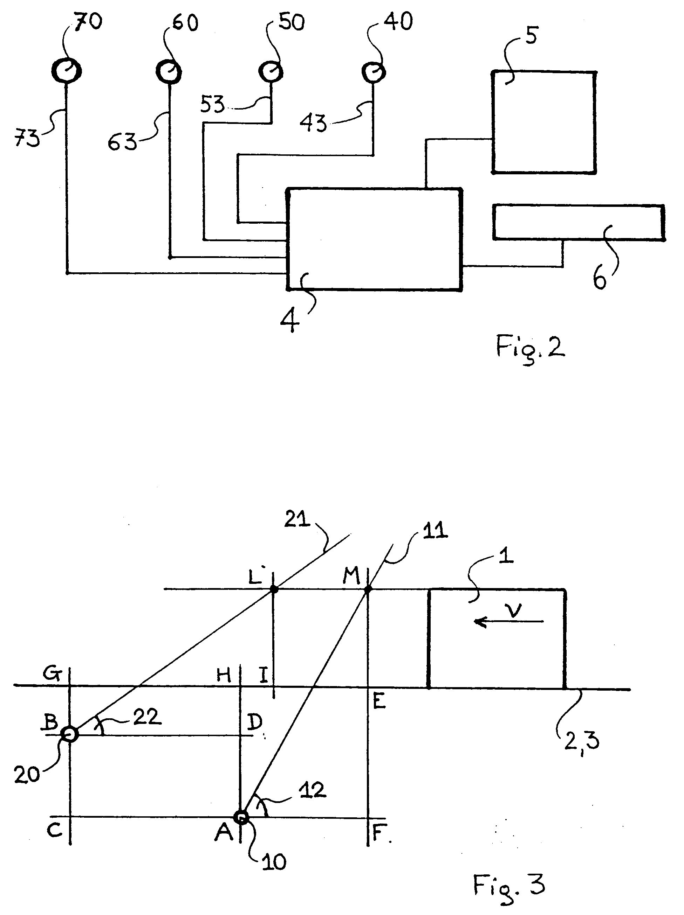

The method according to the invention is now described in conjunction with the figures and referring in particular to Fig.3. Hereinafter reference is always made to the fact that the object is carried by a conveyor belt, but any means suitable for conveying box-like object, such as roller conveyors and tray conveyors, may be used to this end provided that such means do not include the objects inside containers.

Reference numeral 1 stands for a substantially box-like object loaded on a conveyor belt 2,3 and dragged by the latter horizontally leftward with velocity V. Located beneath the belt 2,3 are a first reflection optical system 10 and a second reflection optical system 20; the first reflection optical system 10 generates a first light beam 11 making a first (non-obtuse) angle 12 having value "a" with the direction of motion ; the second optical system 20 generates a second light beam 21 making a second (acute) angle, 22 of value b≠a with the direction of motion.

Before the arrival of object 1, light beams 11 and 21 propagate in space. As object 1 move, there is a first interception of the first light beam 11 at point M and then a second interception of the second light beam 21 at point L. As object 1 moves with a constant velocity V, distance ML corresponds to the product of velocity V with time interval IT between the instant of first interception and the instant of second interception.

The following distances :

CA = BD   between first 10 and second 20 optical systems
AH         between first optical system 10 and surface of conveyor belt 2,3
BC         between second optical system 20 and surface of conveyor belt 2,3
being known, the altitude of object 1 is given by the expression :

$$(AC - V * IT) \frac{tga * tgb}{tga - tgb} + \frac{tgb}{tga - tgb} (AH - BG) - BG$$

easily obtainable from geometric considerations. The location of the two optical systems 10 and 20 is free from a geometric viewpoint and depends only upon requirements of realization as will be seen later on.

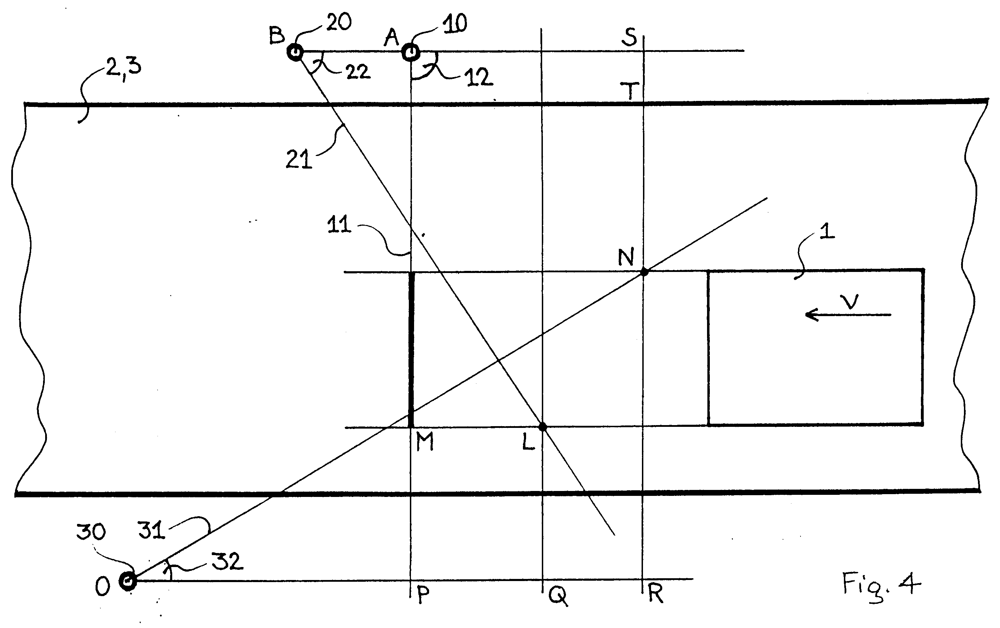

Having reference now to fig.4, the above-mentioned expression allows to calculate also the width of the object 1 provided that one edge of the object is parallel to the direction of motion, i.e. parallel to the longitudinal edge of the conveyor belt 2,3, and that the distance of such edge from the edge of belt 2,3, corresponding to segment TN in fig.4, is already known and the same for all incoming objects. If distance TN is unknown, in order to carry out the measurement it is necessary to place a third reflection optical system 30 at the opposite side of conveyor belt 2,3 with respect to optical systems 10 and 20. The third optical system 30 generates a third light beam 31 making an acute angle 32 of "c" with the direction of motion. Also third light beam 31 gives rise to a third interception at point N.

In fig.4, the value "a" of the non-obtuse angle 12 has been chosen equal to 90 degrees and distance AH = BG ; assuming all geometric parameters in fig.4, and in particular also distance AP between first optical system 10 and third optical system 30, to be known, it is easy to deduce, as in fig.3, that the expression giving the width of object 1 as a function of geometric and velocity parameter is :

$$(Ba + V * IT1) * tgb + (OP + V * IT2) * tgc - AP$$

where IT1 is the length of time interval between the instant of first interception and the instant of second interception, and IT2 is the length of time interval between the instant of first interception and the instant of third interception. This expression provides a value which, the more accurately oriented with respect to the direction of motion (i.e. parallely to it) the object is, the more accurate it is.

For the sake of completeness, having described two examples in which width and altitude of the substantially box-like object 1 are measured according to the method of the present invention, a short notice about the measurement, according to a known conventional method, of the length of the object 1 itself is here given ; to this end, reference is made to fig.4.

The object 1 intercepts the first light beam 11 with the leading end. Such interception persists until, because of motion, the end opposite to the leading end has crossed the line AP, i.e. for the entire length of the object 1. Thus it is easy to compute the length by :

$$V. (Tend - Tstart)$$

where V is the velocity of the moving object, Tstart is the instant when interception occured and Tend is the instant when interception ended. The computation of the volume of the object is immediately obtained from the product of the three dimensions.

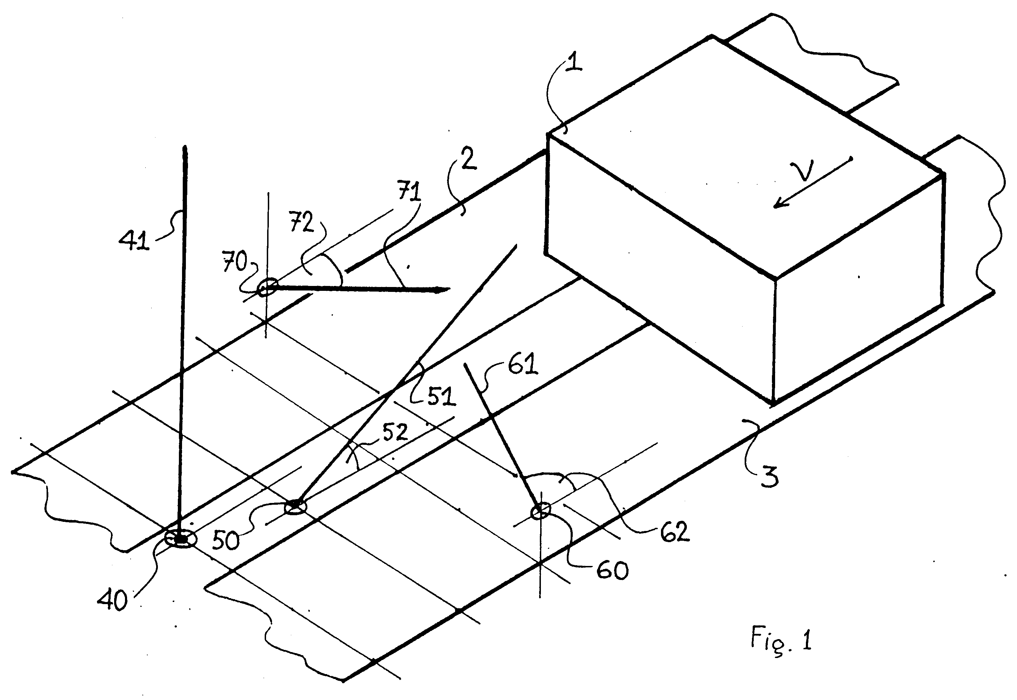

In Fig.1 there is illustrated an example of arrangement according to the present invention suitable for measuring the three dimensions and hence the volume of the object 1. There is illustrated therein four reflection optical systems 40, 50, 60, 70, the conveyor belt 2,3 and the object 1 dragged with velocity V by the conveyor belt. However processing means 4 comprised in the arrangement are not shown, but they do not affect the geometry of the arrangement.

Such optical systems can be composed of reflection photocells should the dimension of the arrangement be restricted to few decimeters, or they may be composed of integrate pairs laser or infrared emitter/detector should the arrangement extend up to a few meters.

In both cases these systems are composed essentially of a first electrical device emitting a beam light and a second electrical device which, when exposed to an incident light beam of the same type as the emitted one, provides an electric signal. Normally the light beam incident on the second electrical device is the beam emitted by the first electrical device and reflected back. When using photocells, the reflecting element can be the object wall or a catadioptric reflector, whilst, in case of laser or infrared pairs, specific reflectors are to be used ; naturally a reflector for each laser used in the arrangement is needed and it is necessary to locate it in such a way as to reflect the incident beam when not intercepted by the object.

The first optical system 40 emits a first light beam 41 perpendicularly to the surface of conveyor belt 2,3 and may be located below or above the conveyor belt 2,3 ; naturally the interception of such first light beam 41 must occur only at the passing of the object 1.

Among possible solutions is the one of using a transparent conveyor belt ; another solution is to cut slots in the belt or to use two belts 2,3 paralleled up and spaced out so as to allow the transit of the light beam.

The second optical system 50 emits a second light beam 51 making a pre-established first acute angle 52 with the direction of motion in a vertical plane in such a way that said second light beam 51 is intercepted by a horizontal edge of the object leading end face. Such edge corresponds to the upper or the lower one according as the second optical system 50 is located above or below the conveyor belt 2,3.

The third optical system 60 emits a third light beam 61 making a pre-established second acute angle 62 with the direction of motion in a horizontal plane in such a way that said third light beam 61 is intercepted by a first vertical edge of the object leading end face. In the arrangement of fig.1, such first vertical edge is the right hand edge with respect to the sense of advancement.

Such an arrangement, as hitherto described, is suitable for measuring the dimensions of the object 1 and hence its volume too ; in fact, bearing in mind what already described about the method, the length of the object 1 is measured by using the optical system 40, altitude is measured through optical systems 40 and 50, and width is measured through optical systems 40 and 60. This is true if object 1 is oriented with one of its edges parallel to the direction of motion and the distance between the object vertical side near to optical system 60 and the edge of belt 2,3 is pre-established and constant for any object.

This result can be achieved e.g. through automatic positioning of the objects on belt 2,3 or, more simply, by using a belt provided with a longitudinal ledge, formed e.g. by a projection, against which the objects are manually or automatically abutted. If such distance from the belt edge cannot be assured, it is necessary to provide a fourth optical system 70 emitting a fourth light beam 71 making a pre-established third acute angle 72 with the direction of motion in a horizontal plane in such a way that said fourth light beam 71 is intercepted by a second vertical edge of the leading end face distinct from said first vertical edge. In the arrangement of fig. 1. Such second vertical edge is the left hand edge with respect to the sense of advancement. The width of the object 1 is hence computed by using optical systems 40,60 and 70 as said. Naturally the number of optical systems can be increased should one decide not to use the same optical system for several measurements.

Referring now to fig.2, in order to obtain the numeric value of said masurements, the arrangement comprises, as said, processing means 4. Each of the optical systems 40, 50,60 and 70 provides, as said, electrical signals 43, 53, 63, 73 respectively. Such electrical signals are fed to the processing means 4, connected thereto so as to be able to calculate the duration of time intervals IT, IT1 and IT2. Inside the processing means the expressions for calculating dimensions are also evaluated.

Such processing means 4 can be realized by a computer, in particular a PC or in view of semplicity of calculations and relative slowness of the conveyor belt, by programmable logic controllers, (PLC), and can be used for other operations connected with the operation of the conveyor belt or the system in which the arrangement according to this invention is used.

Normally such processing means 4 are connected with display means 5, comprising e.g. LCD displays for reading measured values, and with data insertion means 6, such as keyboards, for interaction with the user of the arrangement ; in alternative, they could feature the possibility of interconnection with other computer means for successive data processing.

## Claims

1.  Arrangement for measuring the dimensions of a substantially box-like object travelling with a uniform motion and oriented in such a way that one of its edges is substantially parallel to the direction of motion, characterized in that it comprises :

    a) a first reflection optical system capable of emitting a first light beam parallel to the plane of the object leading end face in such a way that said first light beam is intercepted by said leading end face of the moving object, and of generating a first electrical signal at the instant of interception,

    b) a second reflection optical system capable of emitting a second light beam making a pre-established first acute angle with the direction of motion in a vertical plane, in such a way that said second light beam is intercepted by a horizontal edge of the leading end face of the moving objects, and of generating a second electrical signal at the respective instant of interception,

    c) a third reflection optical system capable of emitting a third light beam making a pre-established second acute angle with the direction of motion, in a horizontal plane, in such a way that said third light beam is intercepted by a vertical edge of the leading end face of the moving object, and of generating a third electrical signal at the respective instant of interception, and

    d) processing means electrically connected with said first, second and third reflection optical systems, respectively receiving said first, second and third electrical signals, and designed to calculate consequently said dimensions of said object, geometric and velocity parameters being known.

2.  Arrangement according to claim 1, characterized in that it further comprises a fourth reflection optical system capable of emitting a fourth light beam making a pre-established third acute with the direction of motion in a horizontal plane in such a way that said fourth light beam is intercepted by a second vertical edge of the leading end face of the moving object, and of generating a fourth electrical signal at the respective instant of interception, and in that said processing means are electrically connected with said fourth reflection optical system and receive from this said fourth electrical signal.

3. Arrangement according to claim 2, characterized in that said first, second, third and fourth reflection optical systems are reflection photocells.

4. Arrangement according to claim 2, characterized in that said first, second, third and fourth reflection optical systems are laser emitter/detector pairs.

5. Arrangement according to claim 1, characterized in that the motion of said object is obtained by dragging the object on a conveyor belt moving with a uniform motion.

6. Arrangement according to claim 5, characterized in that said conveyor belt is composed of two bands paralleled up, moving with the same speed and spaced out by such a distance to allow the passage of said light beams.

7. Arrangement according to claim 5, characterized in that said conveyor belt is provided with a longitudinal ledge against which said object abuts.

8. A method of measuring a transversal dimension of a substantially box-like object travelling with a uniform motion and oriented in such a way as to have one of its edges substantially parallel to the direction of motion, characterized by the steps of

a) placing, in a fixed position, a first reflection optical system emitting a first light beam, in such a way that said first light beam is intercepted by one edge of the object leading end face which is perpendicular to the dimension to be measured, the direction of said first light beam making a (non-obtuse) angle of fixed value "a" with said direction of motion and a right angle with said one edge,

b) placing, in a fixed position, a second reflection optical system, emitting a second light beam, in such a way that said second light beam is intercepted by said one edge, the direction of said second light beam making an second (acute) angle at fixed value b≠a with said direction of motion and a right angle with said one edge,

c) activating said first and second optical systems, and

d) detecting the instants at which said first and second light beams are intercepted because of motion of said object, wherein said dimension is obtained from the following expression

$$(D - V * IT) * \frac{tga * tgb}{tga - tgb} - E$$

where IT is the time interval between said instants, V is the velocity of the object, D a value taking into account the distance between said first and said second optical systems, and E a value taking into account the distances of said first and said second optical systems from the side faces of said object.

9. A method according to claim 8, characterized in further placing, in a fixed position, a third reflection optical system emitting a third light beam, in such a way that said third light beam is intercepted by another edge of the object leading end face parallel to said one edge, the direction of said third light beam making a third (acute) angle of fixed value "c" with said direction of motion and a right angle with said another edge, in activating said third optical system and detecting the instant in which said third light beam is intercepted because of the motion of said object.

10. A method according to claim 9, characterized in that the value "a" of said first (non-obtuse) angle is 90 degrees and in that said dimension is determined through the expression

$$(D1 + V * T1) * tgb + (D2 + V * T2) tgc - F$$

where T1 is he value of the time interval between said instants in which said first and second light beams are intercepted, T2 the value of the time interval between said instants in which said first and third light beams are intercepted, D1 a value that takes into account the distance between said first and second optical system, D2 a value that takes into account the distance between said first and third optical system, and F is a value that takes into account of the distance between said second and said third optical system.

Fig. 1

Fig. 2

Fig. 3

Fig. 4

EP 0 548 464 A1

EP 0 548 464 A1

European Patent Office

EUROPEAN SEARCH REPORT

Application Number

EP 92 11 4185

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 396 953 (MATRA) 2 February 1979 * the whole document * | 1,3,5-8, 10 | G01B11/04 |
| | ----- | | |
| | | | TECHNICAL FIELDS SEARCHED (Int. Cl.5 ) |
| | | | G01B |

The present search report has been drawn up for all claims

| Place of search | Date of completion of the search | Examiner |
|---|---|---|
| THE HAGUE | 14 DECEMBER 1992 | RAMBOER P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

9